# EUROPÄISCHE PATENTSCHRIFT

(11) **EP 2 578 520 B1**
(45) Veröffentlichungstag und Bekanntmachung des Hinweises auf die Patenterteilung: **30.12.2015**
(21) Anmeldenummer: 12006771.5
(22) Anmeldetag: 28.09.2012
(51) Int. Cl.: B65G 47/96, B65G 17/22, B65G 17/34

(54) **Fördervorrichtung**
Conveying device
Dispositif d'acheminement

(30) Priorität: 04.10.2011 DE 202011106265 U
(43) Veröffentlichungstag der Anmeldung: 10.04.2013
(73) Patentinhaber: BEUMER GmbH & Co. KG, 59269 Beckum (DE)
(72) Erfinder: Heitplatz, Heino, 48317 Drensteinfurt (DE)
(74) Vertreter: Philipp, Matthias

(56) Entgegenhaltungen:
- EP-A1- 0 633 208
- EP-A1- 0 774 429
- EP-B1- 1 338 346
- WO-A1-98/47797
- DE-U1- 8 714 976
- DE-U1- 9 302 336
- US-A1- 2003 066 736

## Beschreibung

Die Erfindung betrifft eine Fördervorrichtung zum Transportieren von Gegenständen entlang eines Förderwegs von einer Aufgabestation zu einer Abgabestation, mit einem entlang des Förderwegs in einer Förderrichtung antreibbaren Fahrwagen, der einen Rahmen und ein von dem Rahmen getragenes erstes Lastaufnahmemittel aufweist, das relativ zu dem Rahmen gesteuert stufenlos höhenverstellbar gehalten ist.

Derartige Fördervorrichtungen, die auch als Sortiervorrichtungen bzw. Sorter eingesetzt werden, sind beispielsweise aus DE 87 14 976 U1 oder DE 93 02 336 U1 bekannt.

Aus EP 0 633 208 A1 ist eine Vorrichtung und ein Verfahren zum Sortieren von Gegenständen bekannt, mit Wagen, die entlang einer Schiene bewegbar sind, wobei auf jedem Wagen eine Anzahl von Transporteinrichtungen angeordnet sind, auf denen Gegenstände platziert werden können, wobei jede einzelne Transporteinrichtung individuell angesteuert werden kann.

Aus EP 0 774 429 A1 ist eine Fördervorrichtung mit entlang einer Fahrschiene verfahrbaren Wagen bekannt, wobei auf jedem Wagen mehrere Transporteinrichtungen in unterschiedlichen Höhen angeordnet sind, um Gegenstände gezielt in verschiedenen Höhen aufnehmen oder abgeben zu können.

Die Aufgabe der Erfindung besteht darin, die Flexibilität und Leistungsfähigkeit einer bekannten Fördervorrichtung zu verbessern, insbesondere im Hinblick auf die Möglichkeit, relativ große und relativ kleine Gegenstände mit ein und denselben Förderwagen transportieren zu können, und auch im Hinblick darauf, eine größere Anzahl von Gegenständen je Zeiteinheit transportieren zu können. Auch soll es möglich sein, die Gegenstände auf einer oder auf mehreren unterschiedlichen Ebenen aufnehmen und abgeben zu können, um mehrere Aufgabe- oder Abgabestationen auf kleinerer Grundfläche als bisher unterbringen zu können.

Zur Lösung der vorgenannten Aufgabe schlägt die Erfindung eine Fördervorrichtung nach Anspruch 1 vor. Dies ermöglicht das Anfahren einer beliebigen Ebene bzw. Höhe in einer Aufnahme- oder Abgabestation, entweder mit einem oder mit beiden Lastaufnahmemitteln.

Es kann vorgesehen sein, dass jedes Lastaufnahmemittel mindestens ein Lastaufnahmeelement in Form einer feststehenden Tragschale, einer Kippschale, eines in oder quer zur Förderrichtung wirkenden Gurtförderers oder einer Rollenbahn aufweist.

Bevorzugt wird eine Antriebsenergie für die Höhenverstellung der Lastaufnahmemittel berührungslos an den Fahrwagen übertragen, beispielsweise über Induktionseinheiten, die entlang des Förderwegs angeordnet sind.

Die Lastaufnahmemittel können in Förderrichtung gesehen hintereinander oder nebeneinander angeordnet sein.

Der Rahmen kann T-förmig mit einem länglichen Mittelträger und einem an einem Ende des Mittelträgers angeordneten Querträger ausgebildet sein, wobei an seitlichen Enden des Querträgers jeweils eine Tragrolle mit horizontaler Drehachse und eine Führungsrolle mit vertikaler Drehachse gehalten sind.

Es kann vorgesehen sein, dass mehrere Fahrwagen zugartig gelenkig gekoppelt sind, wobei eine insbesondere allseitig drehbare Kupplung jeweils zwischen einem dem Querträger benachbarten Ende eines Fahrwagens und einem dem Querträger gegenüberliegenden Ende eines weiteren Fahrwagens angeordnet ist. Bei ebenen Anordnungen genügt selbstverständlich eine einfache Kupplung, die lediglich eine Bewegung um eine vertikale Achse zulässt.

Der Getriebemotor ist bevorzugt selbsthemmend ausgeführt, so dass zur Verhinderung eines ungewollten Absenkens keine Haltefunktion oder Arretierung benötigt wird.

Bevorzugt sind die Lastaufnahmemittel symmetrisch in Bezug auf das Doppelhubwerk ausgebildet, damit sich die kragenden Lasten weitest möglich gegenseitig aufheben und der Hubwerksmast geringst möglich auf Biegung beansprucht wird.

Es ist bevorzugt vorgesehen, dass die Fördervorrichtung mehrere Aufgabestationen in einer oder mehreren unterschiedlichen Aufgabeebenen und/oder mehrere Abgabestationen in einer oder mehreren unterschiedlichen Abgabeebenen aufweist.

Die Erfindung wird nachfolgend anhand eines Ausführungsbeispiels erläutert, wobei
Fig. 1 eine Seitenansicht einer ersten Ausführungsform der erfindungsgemäßen Fördervorrichtung mit drei Fahrwagen zeigt,
Fig. 2 eine perspektivische Ansicht entsprechend Fig. 1 zeigt,
Fig. 3 zwei Fahrwagen entsprechend Fig. 2 in Kurvenstellung zeigt,
Fig. 4 eine Querschnittsansicht der Fördervorrichtung nach Fig. 1 zeigt,
Fig. 5 eine perspektivische, aufgebrochene Ansicht eines Hubwerks eines Fahrwagens der Fördervorrichtung nach Fig. 1 zeigt,
Fig. 6 eine perspektivische Darstellung von zwei Fahrwagen einer zweiten, nicht zur beanspruchten Erfindung gehörenden Ausführungsform einer Fördervorrichtung zeigt, und
Fig. 7 eine Draufsicht auf die Ausführungsform nach Fig. 6 zeigt.

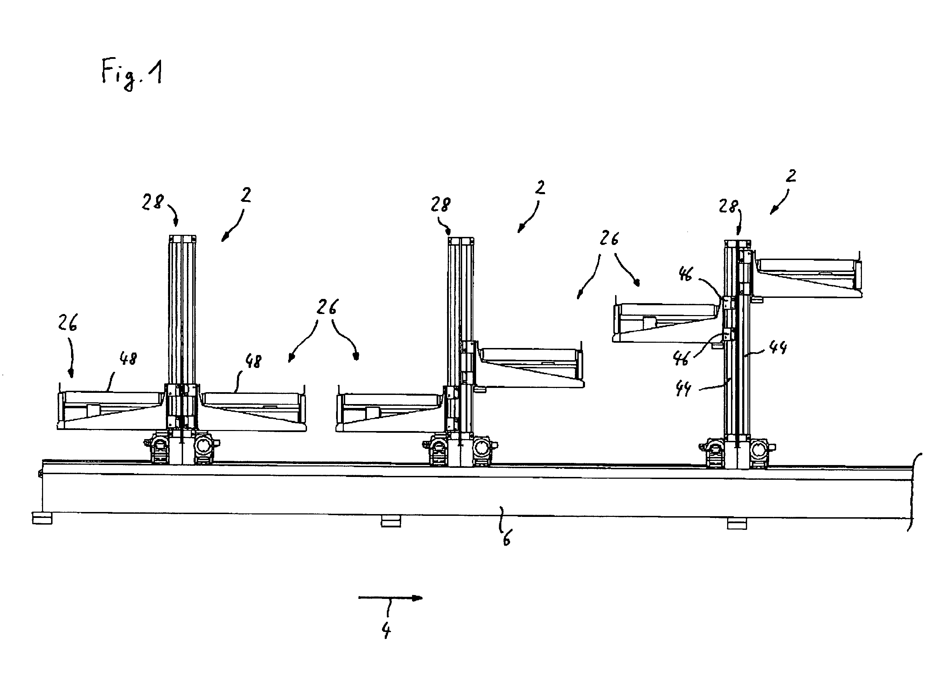

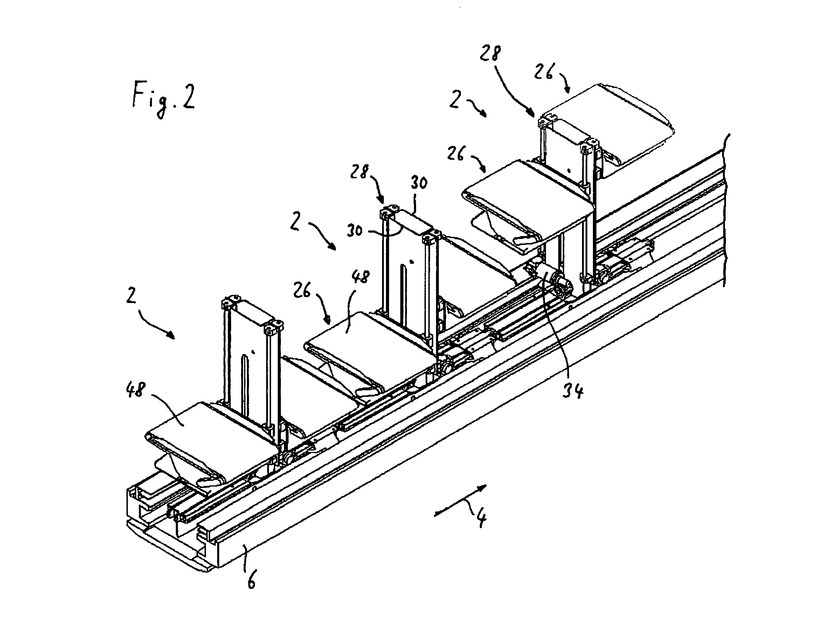

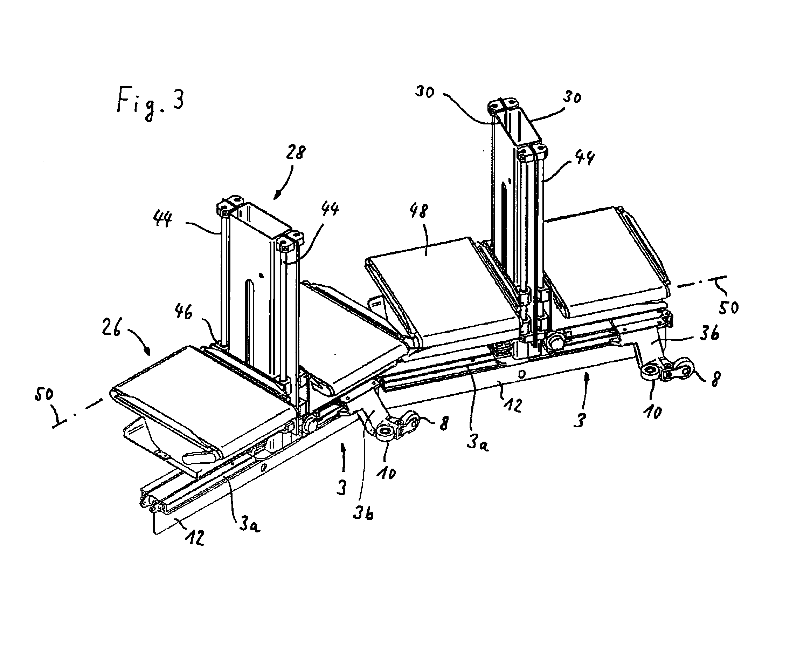

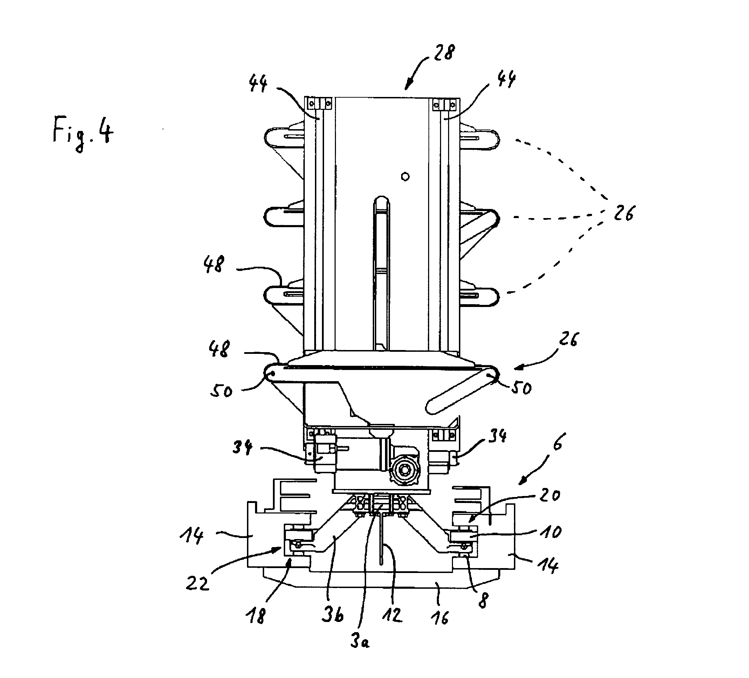

Fig. 2 und 3 zeigen perspektivische Übersichtsdarstellungen einer ersten Ausführungsform einer erfindungsgemäßen Fördervorrichtung, während Fig. 1 und 4 detailliertere Darstellungen in Seiten- bzw. teilweise geschnittener Vorderansicht zeigen. In an sich bekannter Weise sind eine Reihe von Fahrwagen 2 in einer Förderrichtung 4 entlang eines hier durch eine Führungsschiene 6 gebildeten Förderwegs verfahrbar und dienen dem Transport von einzelnen Gegenständen, die an einer oder mehreren nicht dargestellten Aufnahmestationen aufzunehmen und an einer oder mehreren nicht dargestellten Abgabestationen abzugeben sind. Jeder Fahrwagen 2 hat einen im Ganzen T-förmig ausgebildeten Rahmen 3, der einen länglichen Mittelträger 3a und einen an einem Ende des Mittelträgers 3a angeordneten Querträger 3b aufweist (Fig. 3), wobei an seitlichen Enden des Querträgers jeweils eine Tragrolle 8 mit horizontaler Drehachse und eine Führungsrolle 10 mit vertikaler Drehachse gehalten ist, wie auch Fig. 4 erkennen lässt.

Weiterhin besitzt jeder Fahrwagen ein vertikal von dem Mittelträger 3a nach unten reichendes Antriebsschwert 12 zum Zusammenwirken mit einem ortsfesten Antriebsmittel, beispielsweise einer umlaufenden Mitnehmerkette, einem Reibradantrieb oder einem berührungsfreien Induktionsantrieb.

Die einzelnen Fahrwagen 2 können entweder unverbunden sein und von einer geeigneten Steuerung in einem gewünschten gegenseitigen Abstand bewegt werden, oder sie können zugartig gelenkig miteinander gekoppelt sein, wobei eine allseitig drehbare Kupplung, beispielsweise ein Kugelgelenk, jeweils zwischen einem dem Querträger benachbarten Ende eines Fahrwagens und einem dem Querträger gegenüberliegenden Ende eines weiteren Fahrwagens angeordnet ist.

Wie Fig. 4 zeigt, laufen die Fahrwagen in zwei einander spiegelbildlich gegenüberstehenden, im Querschnitt C-förmigen Laufschienen 14, die mit einem Verbindungsstück 16 gekoppelt und in einem festen gegenseitigen Abstand gehalten sind und gemeinsam die Führungsschiene 6 bilden. Die Tragrollen 8 laufen auf unteren, horizontalen Laufflächen 18 der Laufschienen 14, während obere horizontale Laufflächen 20 ein Abheben verhindern. Die Führungsrollen 10 rollen an senkrechten Laufflächen 22 ab.

Jeder Fahrwagen 2 trägt zwei Lastaufnahmemittel 26, die sich bei der in Fig. 1 bis 5 dargestellten Ausführungsform von einem zentralen Hubwerksmast 28 zu entgegengesetzten Richtungen (in und entgegen der Förderrichtung 4) erstrecken. Ein Lastaufnahmemittel 26 kragt von dem Hubwerksmast 28 in Förderrichtung 4 aus, während das andere Lastaufnahmemittel 26 in entgegengesetzter Richtung auskragt. Jedes Lastaufnahmemittel 26 ist entlang der vertikalen Erstreckung des Hubwerksmasts 28 unabhängig höhenverstellbar, wie anhand der drei in Fig. 1 und 2 dargestellten Fahrwagen erkennbar ist. Bei dem in Fig. 1 links dargestellten Fahrwagen befinden sich beide Lastaufnahmemittel 26 in einer untersten Stellung, bei dem mittleren Fahrwagen ist das nach rechts weisende Lastaufnahmemittel 26 teilweise nach oben gefahren, und bei dem rechts dargestellten Fahrwagen ist das nach rechts weisende Lastaufnahmemittel in eine oberste Stellung gefahren, während sich das andere Lastaufnahmemittel in einer niedrigeren Position befindet. Fig. 4 zeigt vom ein erstes Lastaufnahmemittel und hinten (hinter dem Hubwerksmast 28) ein zweites Lastaufnahmemittel in drei unterschiedlichen Positionen.

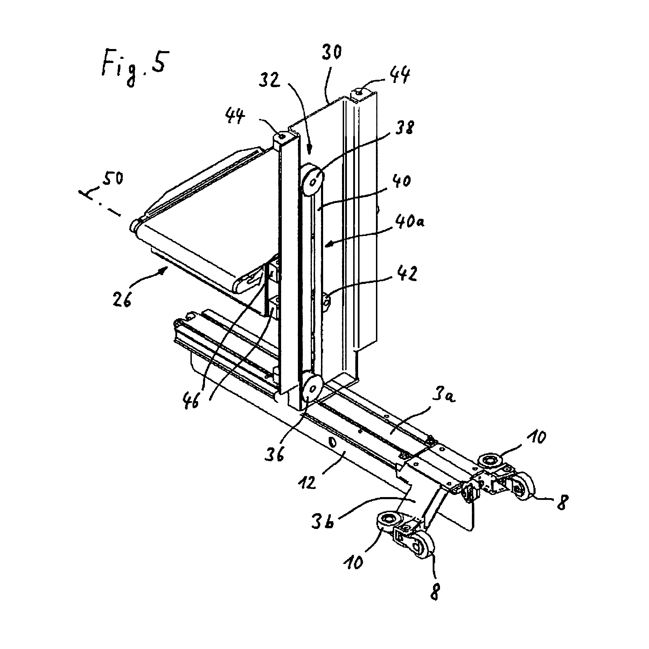

Fig. 4 und 5 zeigen weitere Einzelheiten zur Führung der Lastaufnahmemittel 26 zur Vertikalbewegung entlang des Hubwerksmasts 28. Wie in Zusammenschau mit Fig. 3, in der jeweils ein vollständiger Hubwerksmast 28 dargestellt ist, erkennbar ist, besteht dieser aus zwei doppelt Z-förmig oder hutförmig gekanteten Mastprofilen 30, die spiegelbildlich zusammengefügt und miteinander sowie mit einem Rahmen 3 eines jeweiligen Fahrwagens 2 verbunden sind. Wie Fig. 5 erkennen lässt, sind in einem Hohlraum zwischen zwei Mastprofilen 30 zwei Zugmitteltriebe, hier jeweils ein Zahnriementrieb 32, angeordnet, die der vertikalen Verstellbewegung der beiden Lastaufnahmemittel 26 dienen (Fig. 5 zeigt nur einen Zugmitteltrieb). Jeder Zahnriementrieb ist von einem Getriebemotor 34 angetrieben und weist eine untere Antriebsrolle 36 sowie eine obere Umlenkrolle 38 auf, zwischen denen ein Zahnriemen 40 gespannt ist. An einem Trum 40a des Zahnriemens 40 ist ein Mitnehmer 42 fixiert, der mit einem der Lastaufnahmemittel 26 verbunden ist und für eine Übertragung der Antriebskraft von dem Getriebemotor zum Lastaufnahmemittel sorgt. Ein Positionierantrieb ermöglicht eine schnelle und präzise Verstellung des jeweiligen Lastaufnahmemittels.

Jedes Lastaufnahmemittel 26 ist an dem ihm zugekehrten Mastprofil 30 in vertikaler Richtung geführt, wobei die Führung in dem dargestellten Beispiel durch zwei parallele, hierbei zylindrische Führungsstangen 44 realisiert ist, die jeweils benachbart zu einem mittleren, U-förmigen auswärts gekanteten Bereich des jeweiligen Mastprofils 30 angeordnet sind. Jedes Lastaufnahmemittel 26 weist vier paarweise angeordnete Führungselemente 46 auf, die passend zu den Führungsstangen 44 dimensioniert sind und eine praktisch spielfreie und reibungsarme Verschiebbarkeit und Führung gewährleisten. Während Fig. 5 lediglich ein Mastprofil 30 und ein daran verfahrbar angeordnetes Lastaufnahmemittel 26 zeigt, versteht es sich unter Bezugnahme auf Fig. 3, dass ein weiteres derartiges Mastprofil und Lastaufnahmemittel spiegelbildlich mit der in Fig. 5 dargestellten Einheit zusammengefügt ist, wodurch ein Doppelhubwerk mit einem (einzigen) zentralen Hubwerksmast 28 gebildet ist.

Diese Ausführungsform ermöglicht eine weitestgehende Reduzierung der auf den Hubwerksmast 28 wirkenden kragenden Lasten bzw. Biegebeanspruchungen aufgrund der Hebelwirkung der Lastaufnahmemittel und der aufgenommenen Lasten, die sich aufgrund der entgegengesetzt auskragenden Anordnung im Wesentlichen aufheben oder gegenseitig ausgleichen. Dadurch werden auch die dynamische Beanspruchung der Bauteile sowie die insgesamt bewegte Masse der Fördervorrichtung reduziert, was zu Kosten- und Energieeinsparungen führt.

Das Lastaufnahmemittel 26 besteht in dem dargestellten Beispiel aus einer sogenannten Cross-Belt-Einheit bzw. einem Quergurtförderer, mit einem quer zur Förderrichtung 4 in der einen oder anderen Richtung antreibbaren Querfördergurt 48, der um seitliche Umlenkwalzen geführt ist, die lediglich anhand ihrer Drehachsen 50 angedeutet sind. Alternativ kann eines oder können beide Lastaufnahmemittel 26 durch ein andersartiges Lastaufnahmeelement gebildet sein, beispielsweise eine feststehende oder kippbare Tragschale, oder durch eine Rollenbahn anstelle des Querfördergurts 48. Als weitere Alternative könnte der in Fig. 5 dargestellte Querfördergurt 48 in oder entgegen der Förderrichtung 4 geneigt angeordnet sein, wobei die Drehachsen 50 seiner Umlenkwalzen in einem solchen Fall einen Neigungswinkel mit der Förderrichtung 4 zwischen beispielsweise 5 und 45° einschließen und parallel zu einer vertikalen, in Förderrichtung 4 weisenden Längsmittelebene des jeweiligen Fahrwagens 2 verlaufen können, mit einem ortsfesten Anschlag benachbart zu einem tiefsten Bereich des Querfördergurts, wobei eine solche Anordnung zur Aufnahme von beispielsweise zylindrischen Gegenständen dient, die ansonsten unkontrolliert wegrollen könnten.

Wie Fig. 1 bis 3 erkennen lassen, eignet sich die Fördervorrichtung insbesondere bei (abstands-)fester Kopplung zwischen jeweils zwei benachbarten Fahrwagen zur Aufnahme von Gegenständen, deren Länge die Länge eines Lastaufnahmemittels 26 übersteigt, wobei in einem solchen Fall die zueinander weisenden Lastaufnahmemittel 26 benachbarter Fahrwagen zweckmäßigerweise auf eine gleiche Höhe zu bringen sind, um beispielsweise einen platten- oder quaderförmigen Gegenstand aufzunehmen. Wie Fig. 3 zeigt, besteht bei Kurvenfahrten ein gewisser Nachteil dahingehend, dass benachbarte Fahrwagen in einer Kurve relativ zueinander um eine vertikale Achse verschwenkt werden, wodurch auch die zueinander weisenden Lastaufnahmemittel 26 verlagert werden, was im Einzelfall bei Beladung mit einem relativ langen Gegenstand unerwünscht sein kann.

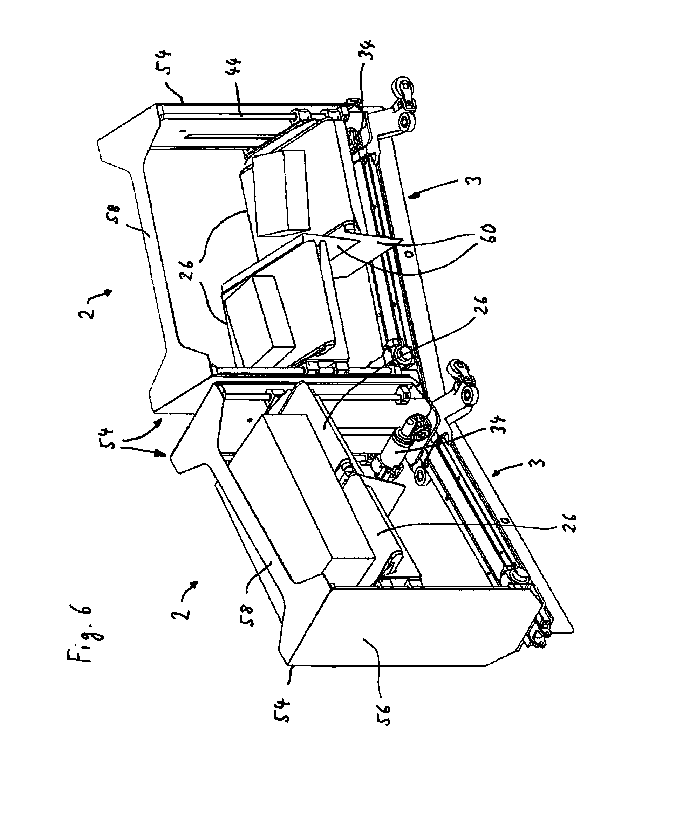

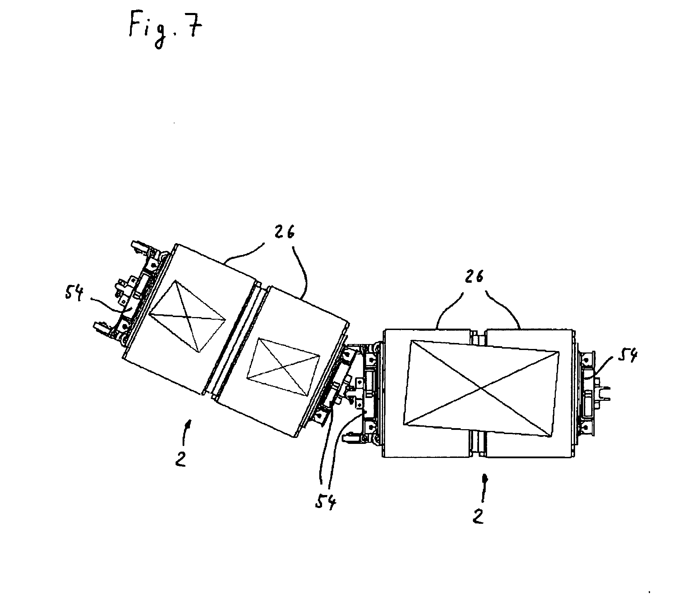

Fig. 6 und 7 zeigen eine nicht zur beanspruchten Erfindung gehörende Ausführungsform, bei der der letztgenannte Nachteil nicht besteht.

Bei dieser Ausführung ist jeweils an einem Ende des Rahmens 3 eines Fahrwagens 2 ein Hubwerksmast 54 angeordnet, an dem ein einzelnes Lastaufnahmemittel 26 höhenverstellbar gehalten ist. Die Bauweise des Hubwerksmast 54 entspricht im Wesentlichen dem in Fig. 5 dargestellten halben oder einseitigen Hubwerksmast, der mit einem Abschlussblech 56 versehen ist. Der Antrieb mit einem Getriebemotor 34 sowie die Vertikalführung mit Führungsstangen 44 entsprechen der ersten Ausführungsform. Zu Erhöhung der Kippstabilität sind die beiden Hubwerksmasten 54 eines Fahrwagens durch eine obere Aussteifung 58 miteinander verbunden.

Fig. 6 und 7 zeigen, dass auf den beiden Lastaufnahmemitteln 26 eines Fahrwagens (rechts) entweder unabhängig voneinander jeweils ein Gegenstand aufgenommen sein kann, wobei sich die Lastaufnahmemittel in gleichen oder unterschiedlichen Höhen befinden können, zur Aufnahme und/oder Abgabe in gleichen oder unterschiedlichen Höhen, oder aber zur Aufnahme eines größeren Gegenstands (links), der auf beiden Lastaufnahmemitteln 26 gleichzeitig aufliegt, wobei diese dann zweckmäßigerweise in eine übereinstimmende Höhe gefahren sind und zur Aufnahme und/oder Abgabe gemeinsam verfahren werden, während sie eine übereinstimmende Höhe beibehalten.

Fig. 6 zeigt noch, dass die Lastaufnahmemittel an ihren einander zugekehrten Seiten oder Rändern jeweils mit einer senkrecht von dem betreffenden Seitenrand nach unten abgehenden Schürze 60 versehen sind, wobei die Schürzen einander mit einem geringen gegenseitigen Abstand parallel gegenüberstehen, beispielsweise weniger als 10 mm, 5 mm oder 2 mm, so dass verhindert wird, dass sich möglicherweise ein auf einem Lastaufnahmemittel befindlicher Gegenstand oder Teile (Riemen, Schnüre ...) davon in einem Spaltbereich zu dem benachbarten Lastaufnahmemittel verklemmt, wenn die Lastaufnahmemittel ausgehend von einer Position, in der sie sich in unterschiedlichen Höhen befinden, zueinander gefahren werden.

Falls sich die starren Schürzen 60 im Hinblick auf den erhöhten Platzbedarf in vertikaler Richtung störend auswirken, können diese beispielsweise durch eine aufrollbare vorhangartige Abdeckung ersetzt werden, die entweder im Bereich des Lastaufnahmemittels fixiert ist und eine drehbare, quer zur Förderrichtung angeordnete Aufnahmewalze nach Art eines Rollos im Bereich des Rahmens 3 aufweist, oder umgekehrt mit fester Anbringung im Bereich des Rahmens und Aufnahmewalze am Lastaufnahmemittel.

Auch bei der ersten Ausführungsform kann eine derartige Spaltabdeckung zwischen einander zugekehrten Lastaufnahmemitteln benachbarter Fahrwagen 2 vorgesehen sein, was allerdings aufgrund der Relativbewegungen in Kurven einen erhöhten Aufwand erfordert.

### Bezugszeichenliste

- 2: Fahrwagen
- 3: Rahmen
- 3a: Mittelträger
- 3b: Querträger
- 4: Förderrichtung
- 6: Förderschiene (Förderweg)
- 8: Tragrolle
- 10: Führungsrolle
- 12: Antriebsschwert
- 14: Laufschiene
- 16: Verbindungsstück
- 18: untere horizontale Lauffläche
- 20: obere horizontale Lauffläche
- 22: senkrechte Lauffläche
- 26: Lastaufnahmemittel
- 28: Hubwerksmast
- 30: Mastprofil
- 32: Zahnriementrieb (Zugmitteltrieb)
- 34: Getriebemotor
- 36: Antriebsrolle
- 38: Umlenkrolle
- 40: Zahnriemen
- 42: Mitnehmer
- 44: Führungsstange
- 46: Führungselement
- 48: Querfördergurt
- 50: Drehachse
- 54: Hubwerksmast
- 56: Abdeckblech
- 58: Aussteifung
- 60: Schürze

## Patentansprüche

1. Fördervorrichtung zum Transportieren von Gegenständen entlang eines Förderwegs (6) von einer Aufgabestation zu einer Abgabestation, mit einem entlang des Förderwegs (6) in einer Förderrichtung (4) antreibbaren Fahrwagen (2), der einen Rahmen (3) und ein von dem Rahmen (3) getragenes erstes Lastaufnahmemittel (26) aufweist, das relativ zu dem Rahmen (3) gesteuert stufenlos höhenverstellbar gehalten ist, **dadurch gekennzeichnet, dass** an dem Rahmen (3) ein zweites Lastaufnahmemittel (26) benachbart zu dem ersten Lastaufnahmemittel (26) angeordnet und unabhängig davon stufenlos gesteuert höhenverstellbar gehalten ist, wobei beide Lastaufnahmemittel (26) an einem Doppelhubwerk gehalten sind, das an einem einzigen Hubwerksmast (28) angeordnet ist und das Doppelhubwerk mittig zwischen den Lastaufnahmemitteln (26) angeordnet ist, wobei die Lastaufnahmemittel (26) in entgegengesetzter Richtung auskragen, wobei das Doppelhubwerk zwei Positionierantriebe (34), insbesondere jeweils einen Schrittmotor, zum Anfahren beliebiger Positionen, und jeweils einen von einem der Getriebemotoren (34) antreibbaren Zugmitteltrieb (32) aufweist, wobei jeweils ein Trum eines Zugmitteltriebs (32) mit einem Lastaufnahmemittel (26) verbunden ist.

2. Fördervorrichtung nach Anspruch 1, **dadurch gekennzeichnet, dass** jedes Lastaufnahmemittel (26) mindestens ein Lastaufnahmeelement in Form einer feststehenden Tragschale, einer Kippschale, eines in oder quer zur Förderrichtung (4) wirkenden Gurtförderers oder einer Rollenbahn aufweist.

3. Fördervorrichtung nach Anspruch 1 oder 2, **dadurch gekennzeichnet, dass** die Lastaufnahmemittel (26) in Förderrichtung (4) gesehen hintereinander oder nebeneinander angeordnet sind.

4. Fördervorrichtung nach einem der vorangehenden Ansprüche, **dadurch gekennzeichnet, dass** der Rahmen (3) T-förmig mit einem länglichen Mittelträger (3a) und einem an einem Ende des Mittelträgers (3a) angeordneten Querträger (3b) ausgebildet ist, wobei an seitlichen Enden des Querträgers (3b) jeweils eine Tragrolle (8) mit horizontaler Drehachse und eine Führungsrolle (10) mit vertikaler Drehachse gehalten ist.

5. Fördervorrichtung nach einem der vorangehenden Ansprüche, **dadurch gekennzeichnet, dass** mehrere Fahrwagen (2) zugartig gelenkig gekoppelt sind, wobei eine allseitig drehbare Kupplung jeweils zwischen einem dem Querträger (3b) benachbarten Ende eines Fahrwagens (2) und einem dem Querträger (3b) gegenüberliegenden Ende eines weiteren Fahrwagens (2) angeordnet sein kann.

6. Fördervorrichtung nach einem der vorangehenden Ansprüche, **dadurch gekennzeichnet, dass** mehrere Aufgabestationen in einer oder mehreren unterschiedlichen Aufgabeebenen und/oder mehrere Abgabestationen in einer oder mehreren Abgabeebenen vorgesehen sind.

## Claims

1. Conveying device for transporting articles along a conveying path (6) from a loading station to a discharge station, with a carriage (2) that can be driven in a conveying direction (4) along the conveying path (6), the carriage having a frame (3) and a first load-receiving unit (26) supported by the frame (3), which is held relative to the frame (3) in a continuously controlled height-adjustable manner, wherein a second load-receiving unit (26) is arranged at the frame (3) adjacent to the first load-receiving unit (26) and is held independently thereof in a continuously controlled height-adjustable manner, wherein both load-receiving units (26) are held on a double lifting mechanism, which is arranged on a single lifting mechanism mast (28) and the double lifting mechanism is arranged centrally between the load-receiving units (26), the load-receiving unit (26) projecting in a cantilevered fashion in opposite directions, wherein the double lifting mechanism has two positioning drives (34), especially a stepping motor each, for approaching any positions desired, and in each case a traction drive (32) which can be driven by one of the geared motors (34), one run of a traction drive (32) in each case being connected to a load-receiving unit (26).

2. Conveying device according to claim 1, **characterized in that** each load-receiving unit (26) has at least one load-handling member in the form of a fixed carrying bucket, a tiltable bucket, a belt conveyor acting in or transversely to the conveying direction (4) or a roller track.

3. Conveying device according to claim 1 or 2, **characterized in that** the load-receiving units (26) are disposed one behind the other or side-by-side when seen in the conveying direction (4).

4. Conveying device according to any one of the above claims, **characterized in that** the frame (3) is configured to be T-shaped with an elongate central beam (3a) and a cross-beam (3b) arranged at one end of the central beam (3a), with a support roller (8) with a horizontal axis of rotation and a guide roller (10) with a vertical axis of rotation mounted at lateral ends of the cross beam (3b) in each case.

5. Conveying device according to any one of the above claims, **characterized in that** a plurality of carriages (2) coupled together in an articulated manner like a train, where a coupling that is rotatable on all sides can be disposed in each case between an end of a carriage (2) adjacent to the cross beam (3b) and an end of a further carriage (2) opposite the cross beam (3b).

6. Conveying device according to any one of the above claims, **characterized in that** a plurality of loading stations are provided on one or more different loading levels and/or a plurality of discharge stations are provided on one or more discharge levels.

## Revendications

1. Dispositif de transport servant à transporter des articles le long d'une trajectoire de transport (6) en provenance d'une station de chargement jusqu'à une station de déchargement, comportant un chariot (2) qui peut être entraîné dans une direction de transport (4) le long de la trajectoire de transport (6), le chariot ayant un châssis (3) et une première unité de réception de charge (26) supportée par le châssis (3), qui est maintenue par rapport au châssis (3) d'une manière réglable en hauteur et à commande continue, dans lequel une deuxième unité de réception de charge (26) est agencée au niveau du châssis (3) de manière adjacente par rapport à la première unité de réception de charge (26) et est maintenue de manière indépendante par rapport à celle-ci d'une manière réglable en hauteur et à commande continue, dans lequel les deux unités de réception de charge (26) sont maintenues sur un mécanisme de levage double, qui est agencé sur un seul mât de mécanisme de levage (28) et le mécanisme de levage double est agencé de manière centrale entre les unités de réception de charge (26), l'unité de réception de charge (26) faisant saillie en porte-à-faux dans des directions opposées, dans lequel le mécanisme de levage double a deux dispositifs d'entraînement de positionnement (34), en particulier un moteur pas à pas chacun, à des fins d'approche des positions quelconques souhaitées, et dans chaque cas un dispositif d'entraînement par traction (32) qui peut être entraîné par l'un des moteurs à train d'engrenages (34), une course d'un dispositif d'entraînement par traction (32) dans chaque cas étant connectée à une unité de réception de charge (26).

2. Dispositif de transport selon la revendication 1, **caractérisé en ce que** chaque unité de réception de charge (26) a au moins un élément de manipulation de charge ayant pour forme un godet de transport fixe, un godet basculant, un transporteur à courroie agissant dans la direction de transport (4) ou dans le sens transversal ou un transporteur à rouleaux.

3. Dispositif de transport selon la revendication 1 ou la revendication 2, **caractérisé en ce que** les unités de réception de charge (26) sont disposées les unes derrière les autres ou côte à côte quand elles sont vues dans la direction de transport (4).

4. Dispositif de transport selon l'une quelconque des revendications précédentes, **caractérisé en ce que** le châssis (3) est configuré pour être en forme de T avec une poutre centrale allongée (3a) et une poutre transversale (3b) agencée au niveau d'une extrémité de la poutre centrale (3a), avec un rouleau de support (8) ayant un axe de rotation horizontal et un rouleau de guidage (10) ayant un axe de rotation vertical montés au niveau des extrémités latérales de la poutre transversale (3b) dans chaque cas.

5. Dispositif de transport selon l'une quelconque des revendications précédentes, **caractérisé en ce qu'**une pluralité de chariots (2) sont accouplés ensemble de manière articulée comme un train, dans lequel un accouplement qui est rotatif de tous les côtés peut être disposé dans chaque cas entre une extrémité d'un chariot (2) se trouvant de manière adjacente par rapport à la poutre transversale (3b) et une extrémité d'un autre chariot (2) se trouvant de manière opposée par rapport à la poutre transversale (3b).

6. Dispositif de transport selon l'une quelconque des revendications précédentes, **caractérisé en ce qu'**une pluralité de stations de chargement sont mises en oeuvre sur un ou plusieurs niveaux de chargement différents et/ou une pluralité de stations de déchargement sont mises en oeuvre sur un ou plusieurs niveaux de déchargement.
